# EUROPEAN PATENT SPECIFICATION

(11) **EP 1 501 328 B1**
(45) Date of publication and mention of the grant of the patent: **09.05.2007**
(21) Application number: 04017683.6
(22) Date of filing: 26.07.2004
(51) Int. Cl.: H04Q 7/38

(54) **Apparatus and method for transmitting / receiving MBMS control information in a mobile communication system**
Vorrichtung und Verfahren zur Übertragung und zum Empfang von MBMS Kontrollinformationen in einem Mobilkommunikationssystem
Procédé et appareil pour la transmission et la réception d'informations de contrôle MBMS dans un système de communication mobile

(30) Priority: 24.07.2003 KR 2003051015; 07.11.2003 KR 2003078810
(43) Date of publication of application: 26.01.2005
(73) Proprietor: SAMSUNG ELECTRONICS CO., LTD., Suwon-si, Gyeonggi-do (KR)
(72) Inventor: Jeong, Kyeong-In, Yeongtong-gu Suwon-si Gyeonggi-do (KR); Kim, Soeng-Hun, Yeongtong-gu Suwon-si Gyeonggi-do (KR); Lee, Kook-Heui, Yeongtong-gu Suwon-si Gyeonggi-do (KR); Choi, Sung-Ho, Yeongtong-gu Suwon-si Gyeonggi-do (KR); Hwang, Sung-Oh, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 392 074
- WO-A-20/04100400
- US-A1- 2003 088 695
- US-A1- 2003 207 696
- "3rd Generation Partnership Project; Technical Specification Group Services and System Aspects; Multimedia Broadcast/Multicast Service (MBMS); Architecture and Functional Description (Release 6)" April 2003 (2003-04), 3GPP TS 23.246 V0.5.0, XX, XX , XP002266263 * the whole document *

## Description

### BACKGROUND OF THE INVENTION

### 1. Field of the Invention

The present invention relates generally to a mobile communication system for supporting a multimedia broadcast/multicast service (MBMS), and in particular, to an apparatus and method for transmitting/receiving control information to support the MBMS.

### 2. Description of the Related Art

A MBMS provides the same multimedia data on one channel to user equipments (UEs) that are subscribed to the MBMS through a WCDMA (Wideband Code Division Multiple Access) system. In an MBMS system, one or more UEs share one channel, thereby maximizing channel efficiency. The efficient channel use enables the provisioning of a multimedia service and ensures a high-quality service at a small cost in terms of the billing.

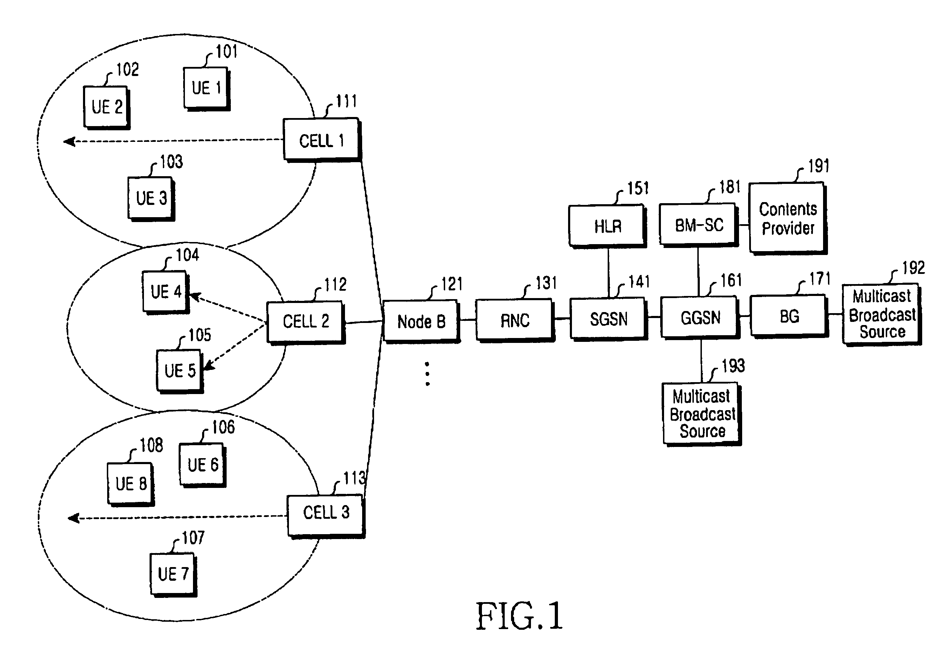

FIG 1 illustrates the structure of a typical MBMS mobile communication system. A MBMS will be described in detail with reference to FIG 1.

Referring to FIG. 1, the MBMS mobile communication system is comprised of a plurality of UEs 101 to 108, a Node B 121, a radio network controller (RNC) 131, and a core network (CN) including a serving GPRS support node (SGSN) 141 and a gateway GPRS support node (GGSN) 161, for controlling the MBMS. The UEs 101 to 108 are located within a plurality of cells 111, 112 and 113. First, second and third UEs 101, 102 and 103 (UE1, UE2 and UE3) are in the service area of a first cell 111 (cell1), and fourth and fifth UEs 104 and 105 (UE4 and UE5) in the service area of a second cell 112 (ccJ12). For conciseness, Node B and cell are interchangeably used in the same concept. The Node B 121 may manage one or more cells. In the illustrated case of FIG 1, the Node B 121 manages the three cells 111, 112 and 113.

The RNC 131 transmits multimedia packet data for the MBMS (hereinafter, referred to as MBMS data) received from the SGSN 141 to the Node B 121. The RNC 131 functions to control the radio channels established between the Node B 121 and the UEs 101 to 108 to provide the MBMS. The RNC 131, the Node B 121, and the cells 111, 112 and 113 collectively form a UMTS radio access network (UTRAN). The UTRAN connects the UEs 101 to 108 to the CN.

The SGSN 141 controls an MBMS-related service for each subscriber. As a major example, the SGSN 141 manages MBMS service contexts. For this purpose, the SGSN 141 contains a list of RNCs that receive an MBMS service and authenticates a subscriber in connection to a home location register (HLR) 151.

The GGSN 161 receives MBMS data from a contents provider 191 and multicast broadcast sources 192 and 193 through a broadcast/multicast service center (BM/SC) 181 and a border gateway (BG) 171 and transmits the MBMS data to the SGSN 141. The GGSN 161 also takes charge of the mobility management for the UEs 101 to 108 and management of the quality of service (QoS) of an MBMS service in progress. The BG 171 receives MBMS data from the multicast broadcast source 192 in a network beyond management of a current service provider and transmits it to the GGSN 161. The BM-SC 181 transmits the MBMS data received from the contents provider 191 to the GGSN 161. At the same time, the BM-SC 181 authenticates the content provider 191, determines the QoS of the MBMS service, performs an error correction function with regard to the MBMS data loss, charges for provided contents, and notifies the UEs 101 to 108 of the MBMS service currently provided. The contents provider 191 and the multicast broadcast sources 192 and 193 are sources of the MBMS data transmission.

As described above, the contents provider 191 transmits an MBMS data stream to the GGSN 161 via the BM-SC 181. The multicast broadcast source 192 also transmits an MBMS data stream to the GGSN 161 via the BG 171. The broadcast multicast source 193 also transmits an MBMS data stream directly to the GGSN 161. The GGSN 161 transmits the MBMS data stream to the UEs 101 to 108 via the SGSN 141 and the RNC 131.

For the provisioning of an MBMS service, the basic information related to the MBMS service is provided to the UEs and a list of the UEs that want to receive the MBMS service is transmitted to a network. Upon receipt of the UE list, the network pages the UEs and establishes a radio bearer to provide the MBMS service. After the UEs establish the radio bearers, the network provides the MBMS service through the radio bearer. When the MBMS service is terminated, the network notifies the UEs of the MBMS service termination. Thus, the UEs release the resources assigned for the MBMS service.

The UEs, if they want to receive the MBMS service, first receive control information related to an MBMS transport channel (MTCH) that delivers the MBMS data. The control information is transmitted on an MBMS control channel (MCCH) mapped to a common control physical channel, other than the MTCH. Typically, a plurality of common control physical channels are available in one cell. The transmission of the MCCH for delivering the same data on the common control physical channels leads to a resource waste. Therefore, it is preferable to map the MCCH to one of the common control physical channels.

Each of UEs that do not have dedicated channels in one cell is tuned with any of the common control physical channels and thus receives only the tuned common control physical channel signal. Therefore, some of the UEs, which monitor a common control physical channel with the MCCH mapped thereto, can receive the MBMS control information, while other UEs that do not even know the transmission of the MBMS control information fail to receive the MBMS control information.

### SUMMARY OF THE INVENTION

An object of the present invention is to substantially solve at least the above problems and/or disadvantages and to provide at least the advantages below. Accordingly, an object of the present invention is to provide an apparatus and a method for transmitting the MBMS control information for an MBMS service from among common control physical channels available in a cell area.

Another object of the present invention is to provide an apparatus and a method for allowing UEs tuned with other common control physical channels to receive the MBMS control information when MBMS control information is transmitted on one selected common control physical channel.

A further object of the present invention is to provide an apparatus and a method for efficiently managing the resources by transmitting the MBMS control information on a common control physical channel.

Still another object of the present invention is to provide an apparatus and a method for efficiently supporting an MBMS service by allowing all UEs in one cell area to receive the MBMS control information.

The above objects are achieved by providing a method and an apparatus for transmitting and receiving the MBMS control information in an MBMS mobile communication system.

According to one aspect of the present invention, in a method of transmitting the MBMS control information in an MBMS mobile communication system, the MBMS control information for an MBMS service is transmitted on an MCCH mapped to one of a plurality of common control physical channels (CCPCHs) available in one cell. A paging message is transmitted to the UEs receiving the MBMS service on a logical channel mapped to each of the CCPCHs. Here, the paging message requests the UEs to switch to the CCPCH having the MCCH and to receive the MBMS control information.

According to another aspect of the present invention, in a method of receiving the MBMS control information in an MBMS mobile communication system, one of a plurality of CCPCHs available in one cell is monitored and the paging message requesting reception of the MBMS control information for an MBMS service is received on the monitored CCPCH. After switching to a CCPCH to which an MCCH is mapped among the CCPCHs, the MBMS control information is received on the switched CCPCH.

### BRIEF DESCRIPTION OF THE DRAWINGS

The above and other objects, features and advantages of the present invention will become more apparent from the following detailed description when taken in conjunction with the accompanying drawings in which:
FIG 1 illustrates the configuration of a typical MBMS mobile communication system;
FIG 2 illustrates the architecture of a radio access network protocol in the MBMS mobile communication system;
FIG 3 illustrates the structure of a secondary common control physical channel (S-CCPCH) applied to the present invention;
FIG 4 illustrates the transmission of an MCCH on one S-CCPCH;
FIG 5 is a diagram illustrating a signal flow for transmitting the MCCH data to a UE receiving an S-CCPCH to which the MCCH is not mapped according to an embodiment of the present invention;
FIG 6 is a flowchart illustrating the operation of an RNC according to the embodiment of the present invention;
FIG 7 is a flowchart illustrating the operation of a UE according to the embodiment of the present invention; and
FIG 8 is a diagram illustrating a signal flow for transmitting MCCH data to a UE receiving an S-CCPCH to which the MCCH is not mapped according to another embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The configuration and channel structure of an MBMS system to which the present invention is applied will be described. Particularly, a radio access network protocol stack defined by the mobile communication standards of the 3GPP (3^{rd} Generation Partnership Project) will be described below.

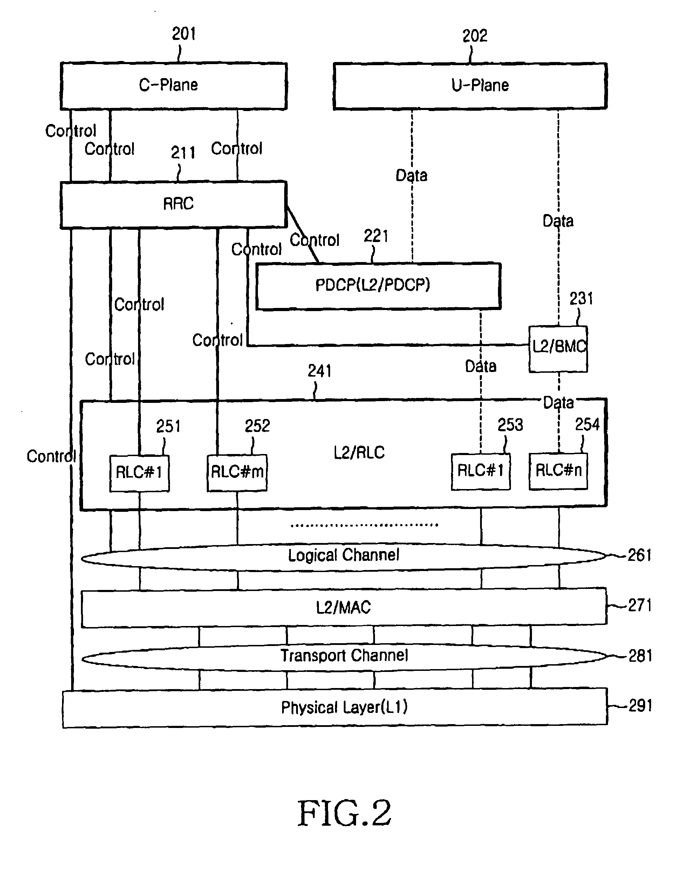

FIG 2 illustrates a protocol architecture between the RNCs and the UEs. A connection between an RNC and a UE is called a Uu interface. Upper layer messages processed on the Uu interface are largely divided into a control signal and user data. In FIG 2, a control plane (C-Plane) signal 201 is illustrated separately from a user plane (U-Plane) data 202. The C-Plane signal 201 and the U-Plane data 202 are non access stratum (NAS) messages for signaling between the UE and the RNC. The UTRAN does not need to know what the NAS messages contain. Unlike the NAS messages, access stratum (AS) messages directly used for radio connection of the UE are used in a radio resource control (RRC) layer 211 or lower layers.

The C-Planc signal 201 is processed in the RRC 211, a radio link control (RLC) layer 241 of layer 2 (L2) (hereinafter, referred to as L2/RLC layer), a medium access control (MAC) layer 271 of L2 (hereinafter, referred to as L2/MAC layer), and a physical layer 291 of layer 1 (L1). The U-Plane data 202 is processed in a packet data convergency protocol (PDCP) layer 221 of L2 (hereinafter, referred to as L2/PDCP layer) and a broadcast/multicast control (BMC) layer 231 of L2 (hereinafter, referred to as L2/BMC layer), the L2/RLC layer 241, the L2/MAC layer 271, and the physical layer 191.

The physical layer 291 is connected to the L2/MAC layer 271 via transport channels 281. The physical layer 291 converts transmission data to a radio signal and a received radio signal to data through channel encoding/decoding, modulation/demodulation, channelization/dechannelization, etc. The converted RF signal is transmitted to the another party on a corresponding physical channel.

The transport channels 281 define processing methods for the particular data in the physical layer 291. The processing methods refer to the channel coding methods and the transport block set sizes transmittable for one unit of time.

The L2/MAC layer 271 is connected to the L2/RLC layer 241 via the logical channels 261. The L2/MAC layer 271 delivers data from the RLC layer 241 to the physical layer 291 on the transport channels 281, and delivers data received from the physical layer 291 on the transport channels 281 to the L2/RLC layer 241 on the logical channels 261. The L2/MAC layer 271 inserts additional information in the data received on the logical channels 261 or the transport channels 281, or analyzes the inserted additional information and performs an appropriate related operation.

The logical channels 261 are largely divided into dedicated channels specific to the particular. UEs and common channels shared among a plurality of UEs. Depending on the type of messages that they deliver, the logical channels 261 are divided into control channels and traffic channels.

The types and the functions of the logical channels 261 will be described below.

A broadcast control channel (BCCH) delivers the UTRAN system control information from the UTRAN to the UE on a downlink. A paging control channel (PCCH) delivers the control information from the UTRAN to a UE that belongs to the UTRAN on the downlink. A common control channel (CCCH) is used to transmit the control information between the UE and the network. A dedicated control channel (DCCH) is used for a one-to-one transmission of the control information between the UE and the network when a connection exists between the UE and the RRC. A common traffic channel (CTCH) is used for a one-to-many data transmission between the network and UEs. Dedicated traffic channels (DTCH) are used for a one-to-one data transmission between the network and the UE.

Next, regarding the types and functions of the transport channels, a broadcast control transport channel (BCH), to which the BCCH is mapped, transmits the BCCH data. A paging transport channel (PCH), to which the PCCH is mapped, transmits the PCCH data. A random access channel (RACH) is a channel by which the UE accesses the network access and transmits the control messages and the short data to the network. A forward access channel (FACH) transmits the control messages and the data from the network to a particular UE or particular UEs. The BCCH, CTCH, CCCH, DCTH, and DCCH can be mapped to the FACH. A dedicated transport channel (DCH) transmits the data and the control signals between the network and the UE. The DTCH and DCCH are mapped to the DCH. A downlink shared channel (DSCH) is a downlink channel that delivers a large volume of data from the network to the UE. The DTCH and DCCH are mapped to the DSCH. A high speed DSCH (HS-DSCH) is a downlink channel that improves the transmission capability of the DSCH. The DTCH and the DCCH are mapped to the HS-DSCH.

Physical channels include a primary common control channel (P-CCPCH) for transmitting the BCH, a secondary common control physical channel (S-CCPCH) for transmitting the PCH and the FACH, a dedicated physical channel (DPCH) for transmitting the DCH, a physical downlink shared channel (PDSCH) for transmitting the DSCH, a high speed physical downlink shared channel (HS-PDSCH) for transmitting the HS-DSCH, and a physical random access channel (PRACH) for transmitting the RACH. There are also physical channels, to which the transport channels are not mapped, which deliver only physical layer-related information in no conjunction with the higher layers. These physical channels are a pilot channel, a primary synchronization channel, a secondary synchronization channel, a paging indicator channel, an acquisition indicator channel, and a physical common packet channel.

The L2/RLC layer 241, after receiving a control message from the RRC layer 211, processes the control message in an appropriate form according to the characteristics of the control message through the transmitting RLC entities, RLC #1 251 to RLC #m 252. The processed control message is transmitted to the L2/MAC layer 271 on the logical channels 261. The L2/RLC layer 241 receives data from the L2/PDCH layer 221 and the L2/BMC layer 231 and processes the data in an appropriate form through receiving the RLC entities, RLC #1 253 to RLC #n 254. The processed data is transmitted to the L2/MAC layer 271 on the logical channels 261. The number of the RLC entities in the L2/RLC layer 241 is determined by the number of radio links between the UEs and the RNC. The L2/RLC entities 251 to 254 operate in one of an acknowledged mode, an unacknowledged mode, and a transparent mode.

The L2/PDCH layer 221 is in a higher layer than the L2/RLC layer 241. The L2/PDCH layer 221 performs packet data control functions including compression of the header of an IP (Internet Protocol) packet, and data integrity protection in the case of an RNC change due to the UE mobility. The L2/BMC layer 231, higher than the L2/RLC layer 241, supports a broadcast service that transmits the same data to many unspecific UEs in a cell.

The RRC layer 211 performs a control operation for assigning or releasing radio resources between the RNC and the UE. The relationship between the UE and the RNC is defined as a connected mode or an idle mode. The connected mode refers to a state where the RRC layer 211 of the RNC can exchange control signaling or data with a particular UE. The RRC layer 211 has information related to the UEs in the connected mode. A radio connection required for the connected mode is called an RRC connection. The RNC manages the radio resources assigned to the UEs and their mobility by the RRC connections and transmits signals from the CN to the UEs. If a UE is in the idle mode within the service area of the RNC, the RRC layer 211 does not recognize the presence of the UE. The RRC layer 211 cannot exchange control signaling or data with a UE in the idle mode.

The states of the connected mode are CELL_DCH, CELL_PCH, CELL_FACH, and URA_PCH. In the CELL_DCH, a UE exchanges user data with the RNC on a dedicated physical channel assigned to the UE, and the DCH and DSCH are mapped to the dedicated physical channel. However, in other states, particularly in the CELL_FACH state, the UE is tuned with a common physical channel, e.g., the S-CCPCH, to monitor the FACH.

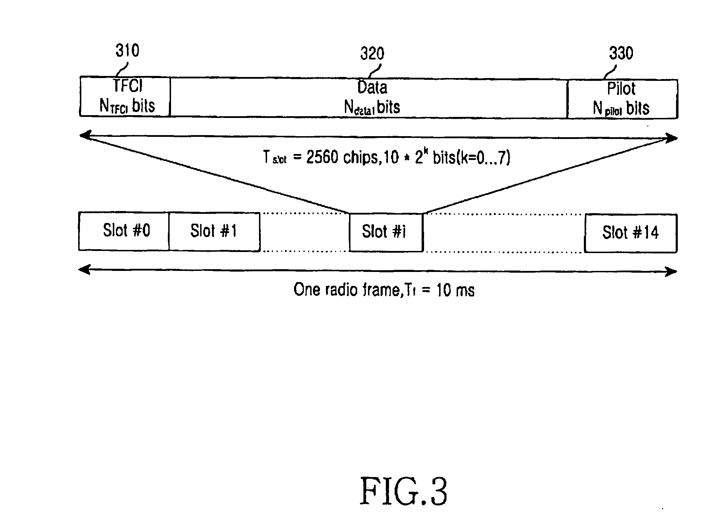

FIG 3 illustrates the structure of the S-CCPCH. The S-CCPCH delivers the FACH and PCH generated from a higher layer.

Referring to FIG 3, one radio frame of the S-CCPCH includes 15 slots, and each slot has a Data field 320, a TFCI (Transport Format Combination Indicator) field 310, and a Pilot field 330. The Data field 320 provides the FACH or the PCH data, and the TFCI field 310 transmits an N_{TFCJ}-bit TFCI indicating the format of the data in the Data field 330. The Pilot field 330 transmits Nₚᵢₗₒₜ pilot bits. The number of bits in each field is determined by the spreading factor (SF) of an OVSF (Orthogonal Variable Spreading Factor) code assigned to the S-CCPCH.

The FACH is a transport channel that is shared among a plurality of UEs, not dedicated to one particular UE. Nonetheless, the FACH can deliver pure data or control information to a predetermined UE. A UE, which an RNC requests to be in the CELL_FACH state, receives all FACH data on the S-CCPCH and processes or discards the FACH data by analyzing its header.

The MBMS control signals as well as the MBMS data streams have a multicast feature. For example, if a predetermined MBMS service is provided to a particular cell area, radio bearer (RB) information related to the MBMS service is needed for all UEs that want to receive the MBMS service. That is why it is preferable to transmit control signals related to the MBMS service on a common control channel. An MCCH that delivers the MBMS control signals is a logical channel mapped to the FACH and the FACH is transmitted on the S-SCCPCH.

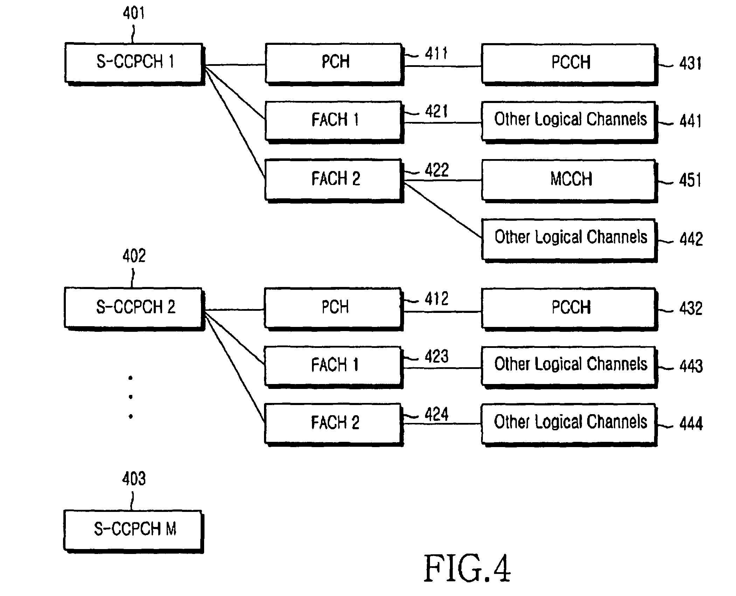

The mapping relationship between the S-CCPCH and the FACH will be described in detail with reference to FIG 4. A plurality of S-CCPCHs 401 to 403 are established in a cell. The S-CCPCHs 401 to 403 transmit PCHs 411 and 412 and FACHs 421 to 424. One or more FACHs 421 and 422 and one PCH 411 are mapped to the S-CCPCH 401, or only one or more FACHs 421 and 422 are mapped to the S-CCPCH 401. Since up to eight transport channels can be mapped to one S-CCPCH 401, the S-CCPCH 401 may have up to eight FACHs.

A PCCH 431 is mapped to the PCH 411, to deliver a page message to a particular UE. The logical channels mapped to the FACHs 421 and 422 are a DCCH, a DTCH, a BCCH, a CCCH, and a CTCH, which are described as other logical channels in FIG. 4.

Each of the UEs within a cell monitors one of the S-CCPCHs 401 to 403 and receives control information or user data on the monitored S-CCPCH. A predetermined one of the S-CCPCHs 401 to 403, the S-CCPCH 401 (S-CCPCH 1), has an FACH 422 (FACH 2) to which an MCCH 451 for an MBMS service is mapped.

### First Embodiment

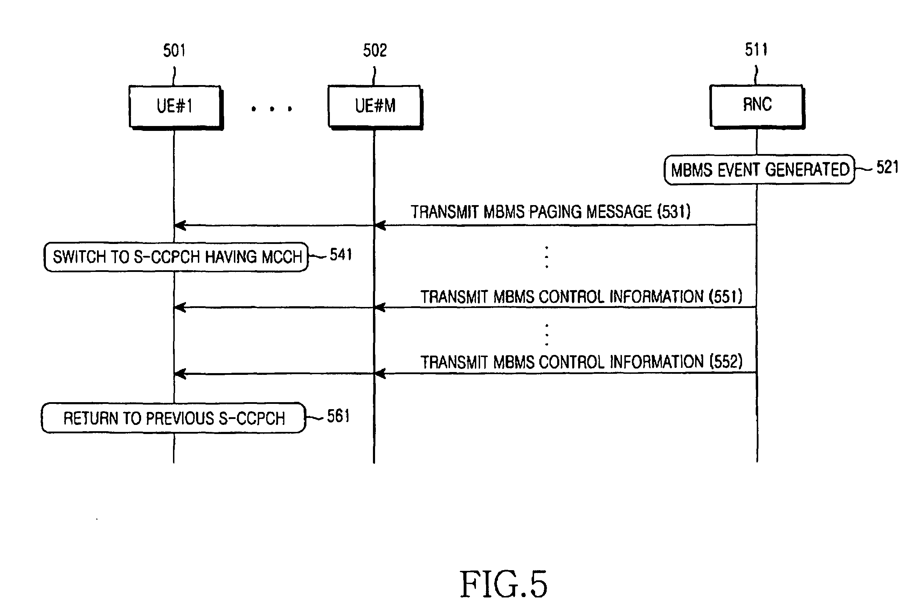

FIG 5 illustrates an operation for receiving an MCCH in the UEs that are in a CELL_FACH state, and receive the S-CCPCHs (402 to 403 in FIG 4) to which no MCCHs are mapped according to an embodiment of the present invention. In FIG 5, UEs 501 and 502 (UE#1 and UE#M) want to receive an MBMS service and an RNC 511 supports the MBMS service. UE#1 501 monitors the S-CCPCH 402 or 403 to which the MCCH 451 is not mapped, while UE#M 502 monitors the S-CCPCH 401 to which the MCCH 451 is mapped.

Referring to FIG 5, an event requiring transmission of the MBMS control information for the MBMS service is generated in step 521. Such MBMS events are an MBMS notification, an MBMS counting, a channel type notification, and an MBMS termination. While not shown separately, the MBMS control information is simultaneously transmitted on the MCCH 451 with the generation of the event. The MBMS control information includes information about all of the available MBMS services in the cell. For example, upon generation of an MBMS notification event, an MBMS control message is transmitted on the MCCH 451, which contains an MBMS ID, an MBMS Notification Message Type, an MBMS Service Activation Time, an RRC Connection Indicator, and an RACH Parameter. UE#M 502, which monitors the S-CCPCH 401 having the MCCH 451 mapped thereto, can receive the MBMS control information on the MCCH 451 without any additional processing.

In step 531, upon generation of an event requiring the transmission of the MBMS control information, the RNC 511 transmits an MBMS Paging message to UE#1 501 in the CELL_FACH state. The MBMS Paging message is used to allow the UEs in the CELL_FACH state for receiving the MBMS service to receive an S-CCPCH having an MCCH. The MBMS Paging message is transmitted on the logical channel, CCCH, mapped onto the FACH. The MBMS Paging message is repeatedly transmitted a predetermined number of times to ensure proper reception performance.

Upon receipt of the MBMS Paging message, UE#1 501, which monitors the S-CCPCH 402 or 403 without the MCCH 451 mapped thereto, switches to the S-CCPCH 401 and receives the FACH 422 on the S-CCPCH 401 in step 541. UEs#1 501 and #M 502 receive the MBMS control information on the MCCH 451 and receive the MBMS service based on the MBMS control information in steps 551 and 552. Upon completed reception of the MBMS control information, UE#1 501 returns to the previous S-CCPCH 402 or 403 in the CELL_FACH state and resumes the service received before the switching, in step 561.

Table 1 below illustrates the structure of the MBMS Paging message.

**Table 1**

| Information elements | Need | Multi | Type and Reference |
|---|---|---|---|
| > Message Type | MP | | |
| >MBMS IE | | | |
| >>MBMS ID | MP | 1 to max MBMS for paging | MBMS Service ID or TMGI or M-RNTI |
| >>MBMS Paging Cause | MP | | Enumerated |

As illustrated in Table 1, the messages exchanged between a UE and an RNC each have a plurality of information elements (IEs). The property of each IE is represented by Need, Multi, and Type and Reference. The Need indicates whether an IE must exist in a corresponding message or in a higher-layer IE. MP (Mandatory Present) means that the existence of the IE in the message or the higher-layer IE is mandatory. The Multi indicates the maximum number of occurrences of the IE. Unless specified under the Multi, a single IE is present. The Message Type and the MBMS Paging Cause each occur once. The Type and Reference indicates the way in which the IE is coded. The Enumerated indicates that although the IE is represented as an integer, it is interpreted as a value corresponding to the integer in a receiver.

The Message Type is set to indicate the MBMS Paging message. The MBMS IE includes the MBMS ID and the MBMS Paging Cause. The MBMS ID has MBMS services-specific IDs. These IDs are global IDs such as multicast IP addresses, TMGIs (Temporary MBMS Group Identifiers), or MBMS-RNTIs (MBMS Radio Network Temporary Identifiers). The MBMS Paging Cause tells the UE what MBMS control information the UE is to receive on the MCCH after receiving the MBMS Paging message. The MBMS Paging Cause can indicate an MBMS event type. When a plurality of MBMS events are generated, the MBMS ID and the MBMS Paging Cause have values under the Multi.

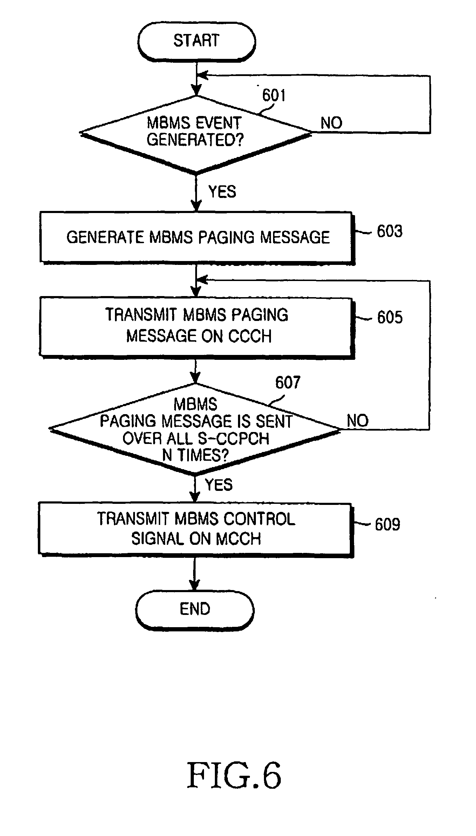

FIG. 6 is a flowchart illustrating an operation for transmitting the MBMS Paging message in an RNC according to the embodiment of the present invention.

Referring to FIG. 6, the RNC determines if an MBMS event has occurred in step 601. The MBMS event can be an MBMS notification, an MBMS counting, a channel type notification, or an MBMS termination.

In step 603, the RNC generates the MBMS Paging message. To increase the reception reliability of the MBMS Paging message, the RNC can repeatedly transmit the MBMS Paging message. If the MBMS Paging message is not transmitted repeatedly, a UE, when it is at a measurement occasion in the CELL_FACH state, may perform measurements without receiving the MBMS Paging message.

In step 605, the RNC transmits the MBMS Paging message on a plurality of S-CCPCHs available in the cell areas under its control. Since each of the S-CCPCHs includes a plurality of FACHs, the RNC selects one of them, maps the CCCH data containing the MBMS Paging message to the selected FACH, and transmits the MBMS Paging message. The RNC determines if the MBMS Paging message has been transmitted on all the S-CCPCHs N times in step 607. If it has not, the RNC returns to step 605. If the MBMS Paging message has been transmitted N times, the RNC transmits an MBMS control signal on an MCCH mapped onto a predetermined S-CCPCH in step 609.

The UEs monitoring the S-CCPCH having the MCCH can receive the MBMS control information without receiving the MBMS Paging message. However, without receiving the MBMS Paging message, the UEs do not know the MBMS Paging Cause and thus does not know which MBMS control information to receive on the MCCH. Therefore, the MBMS Paging message is also transmitted on the S-CCPCH to which the MCCH is mapped. It can be further contemplated as another embodiment, that if the Paging Cause is not used, the MBMS Paging message is not transmitted on the S-CCPCH with the MCCH.

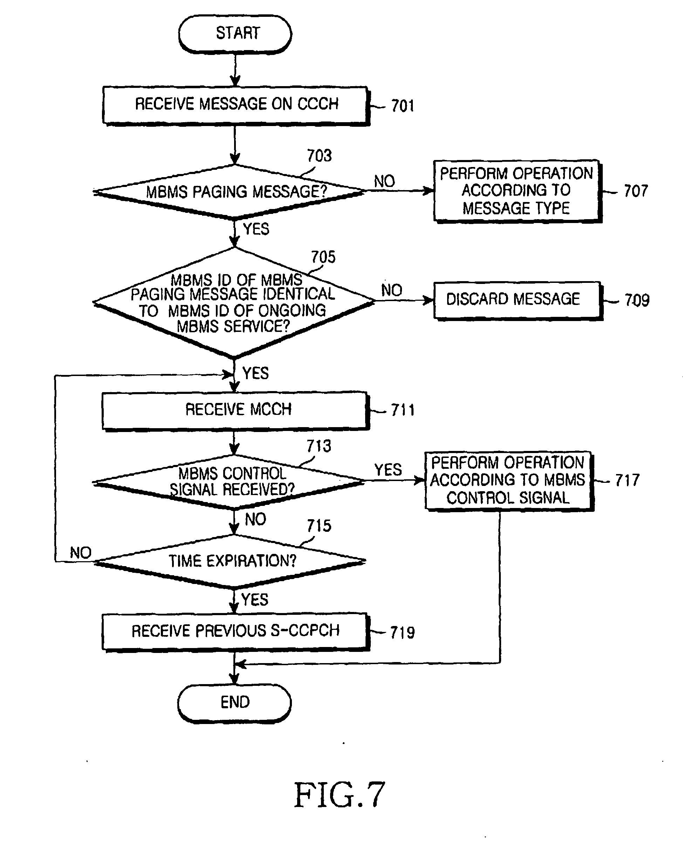

FIG. 7 is a flowchart illustrating an operation for receiving the MBMS Paging message in a UE according to the embodiment of the present invention.

Referring to FIG. 7, the UE receives a CCCH message on an FACH in step 701. The UE can determine whether or not the CCCH message has been used by checking a TCTF (Target Channel Type Field) in the MAC headers of a message received on the FACH. In step 703, the UE determines if the CCCH message is an MBMS Paging message by checking the Message Type of the CCCH message. If the CCCH message is an MBMS Paging message, the UE proceeds to step 705, otherwise, the process goes to step 707. In step 707, the UE performs an operation as specified by the CCCH message.

In step 705, the UE determines if the MBMS Paging message indicates an ongoing MBMS service by checking the MBMS ID of the MBMS Paging message. If the MBMS Paging message indicates the ongoing MBMS service, the UE proceeds to step 711. If the MBMS Paging message does not indicate the ongoing MBMS service, the UE discards the MBMS Paging message in step 709. To proceed to step 711, the UE checks the MBMS Paging Cause of the MBMS Paging message. If the UE determines from the MBMS Paging Cause that it does not need the MBMS control information on an MCCH, the UE performs a corresponding operation instead of performing step 711. For example, if the MBMS Paging Cause indicates "session termination", the UE terminates a service corresponding to the MBMS ID of the MBMS Paging message.

The UE receives an S-CCPCH having the MCCH and reads an MBMS. control signal corresponding to the MBMS Paging Cause in step 711. At the same time, the UE determine if the S-CCPCH having the MCCH has already been received. The S-CCPCH having the MCCH is already known from a system information block in a system acquisition procedure. If the UE has already received the S-CCPCH having the MCCH, the UE reads the MBMS control signal on a current S_CCPCH. Otherwise, the UE memorizes a current S-CCPCH, switches to the S-CCPCH having the MCCH, and reads the MBMS control signal.

In step 713, the UE determines if the desired MBMS control signal has been received. The determination is made by determining if the MBMS control signal matches the MBMS Paging Cause included in the MBMS Paging message. If the desired MBMS control signal is received, the UE performs an operation corresponding to the MBMS control signal in step 717. If the UE determines that the MBMS control signal is not successfully received, the UE determines if a predetermined time has elapsed in step 715. Upon expiration of the predetermined time, the UE goes to step 719. If the predetermined time continues, the UE returns to step 711 and receives the MCCH. In step 719, the UE returns to the S-CCPCH received before the witching based on the memorized information.

### Second Embodiment

While the above-described embodiment uses the MBMS Paging message on a common channel, CCCH, a Paging Type II message on a 3GPP dedicated channel is used in another embodiment of the present invention.

Table 2 illustrates the format of an existing 3GPP Paging Type II message.

**Table 2**

| Information element/Group name | Need | Multi | Type and Reference | Semantics description |
|---|---|---|---|---|
| > Message Type | MP | | Message type | |
| >UE IE | | | | |
| >>RRC Transaction Identifier | MP | | RRC transaction identifier | |
| >>Integrity Check Info | CH | | Integrity check info | |
| >> Paging Cause | MP | | Paging cause | |
| >CN IE | | | | |
| >>CN Domain Identity | MP | | CN domain identity | |
| >>paging Record Type Identifier | MP | | Paging record type identifier | |

The Paging Type II message is used to page UEs in a connected mode on a logical channel, DCCH. The Paging Type II message includes a Message Type, a UE IE, and a CN IE. The UE IE includes an RRC Transaction Identifier, an Integrity Check Info, and a Paging Cause. The CN IE includes a CN Domain Identity and a Paging Record Type Identifier. In the embodiment of the present invention, a Paging Cause is set to a new value indicating the switching to an S-CCPCH having an MCCH. Table 3 below illustrates the Paging Cause field having an additional Paging Cause value according to the embodiment of the present invention.

**Table 3**

| Information element/Group name | Need | Multi | Type and Reference | Semantics description |
|---|---|---|---|---|
| Paging Cause | MP | | Enumerated (Terminating Conversational Call, Terminating Streaming Call, Terminating Interactive Call, Terminating Background Call, Terminating High Priority Signaling, Terminating Low Priority Signaling, Terminating-cause unknown, MBMS control message transmission) | |

As illustrated in Table 3, the Paging Cause further includes a value indicating "MBMS control message transmission".

Upon generation of an event requiring the transmission of the MBMS control information for a particular MBMS service, the RNC sets the Paging Cause to "MBMS control message transmission" and transmits a Paging Type II message containing this Paging Cause value on a DCCH to the UEs that are receiving the MBMS service in a CELL_FACH state. The UEs switch to an S-CCPCH having an MCCH mapped thereto and receive the MBMS control information, according to the Paging Cause.

However, the UEs cannot acquire sufficient information related to the MBMS paging cause just from the Paging Cause set to "MBMS control message transmission". For example, if a UE receives two or more MBMS services, it cannot know from the Paging Cause the MBMS service about which the MBMS control information is related. Therefore, as a modification to the second embodiment of the present invention, the Paging Type II message is modified to include the Paging Cause and an MBMS ID as well.

**Table 4**

| Information element/Group name | Need | Multi | Type and Reference |
|---|---|---|---|
| Paging Cause | MP | | Enumerated |
| MBMS ID | MP | 1 to max MBMS for paging | MBMS Service ID or TMGI or M-RNTI |

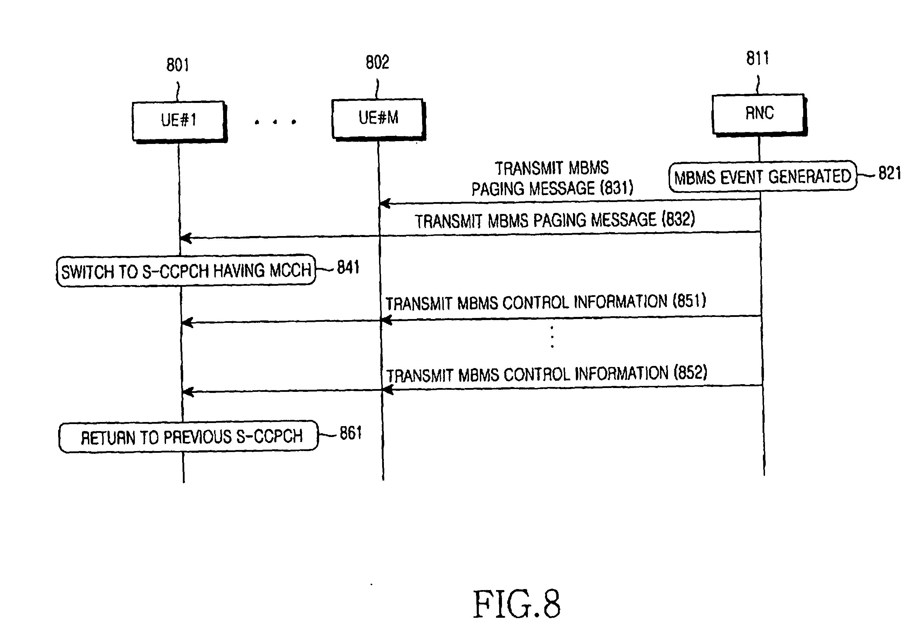

FIG. 8 is a diagram illustrating a signal flow for transmitting MBMS control information to a UE that receives an S-CCPCH without an MCCH in a CELL_FACH state according to the second embodiment of the present invention. In FIG. 8, UEs 801 to 802 (UE#1 and UE#M) want continuous support of an MBMS service and an RNC 811 supports the MBMS service. UE#1 801 monitors an S-CCPCH to which an MCCH is not mapped, while UE#M 802 monitors an S-CCPCH to which the MCCH is mapped.

Referring to FIG. 8, an event requiring the transmission of the MBMS control information for the MBMS service is generated in step 821. Such MBMS events are an MBMS notification, an MBMS counting, a channel type notification, and an MBMS termination. In steps 831 and 832, upon generation of an event requiring transmission of MBMS control information, the RNC 811 transmits a Paging Type II message to UE#1 801 and UE#M 802 in the CELL_FACH state. If a Paging Cause of the Paging Type II message is set to "MBMS control message transmission" or the Paging Type II includes both an MBMS ID and a Paging Cause, UE#1 801 switches to the S-CCPCH having the MCCH in step 841. In steps 851 and 852, UE#1 801 and UE#M 802 receive the MBMS control information on the MCCH from the RNC 811. UE#1 801 returns to the S-CCPCH received in the CELL_FACH state before the switching in step 861.

In accordance with the present invention as described above, the UEs monitoring an S-CCPCH without an MCCH as well as the UBs monitoring an S-CCPCH with the MCCH can reliably receive the MBMS control information, so that they can efficiently receive an MBMS service. Also, the transmission of the MBMS control information over one of the S-CCPCHs available in one cell area leads to efficient resource management in the cell.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of transmitting MBMS control information in an MBMS, Multimedia Broadcast/Multicast Service, mobile communication system, comprising the steps of:
transmitting MBMS control information for an MBMS service on an MBMS control channel, MCCH, mapped to one of a plurality of common control physical channels CCPCHs, available in one cell; and
transmitting a paging message to at least one user equipment (UE) receiving the MBMS service on a logical channel mapped to each of the CCPCHs, the paging message requesting the at least one UE to switch to the CCPCH having the MCCH and receive the MBMS control information.

2. The method of claim 1, wherein the paging message is transmitted upon generation of a predetermined event requiring transmission of the MBMS control information.

3. The method of claim 2, wherein the event is one of a MBMS notification, a MBMS counting, a channel type notification, and a MBMS termination.

4. The method of claim 1, wherein the paging message contains a message type and at least one MBMS service ID related to the MBMS control information.

5. The method of claim 4, wherein the paging message is transmitted on a common control logical channel mapped to each of the CCPCHs.

6. The method of claim 1, wherein the paging message contains a message type, at least one MBMS service ID related to the MBMS control information, and a paging cause indicating transmission of the MBMS control information.

7. The method of claim 6, wherein the paging message is transmitted on a dedicated control logical channel mapped to each of the CCPCHs.

8. A method of receiving MBMS control information in an MBMS Multimedia Broadcast/Multicast Service, mobile communication system, comprising the steps of:
monitoring one of a plurality of common control physical channels, CCPCHs, available in a cell of the mobile communication system and receiving a paging message requesting reception of MBMS control information for an MBMS service on the monitored CCPCH; and
switching to a CCPCH to which an MBMS control channel, MCCH, is mapped from among the plurality of CCPCHs and receiving the MBMS control information on the switched to CCPCH.

9. The method of claim 8, wherein the paging message is transmitted upon generation of a predetermined event requiring transmission of the MBMS control information.

10. The method of claim 9, wherein the event is one of a MBMS notification, a MBMS counting, a channel type notification, and a MBMS termination.

11. The method of claim 7, wherein the paging message contains a message type and at least one MBMS service ID related to the MBMS control information.

12. The method of claim 11, wherein the paging message is received on a common control logical channel mapped to the monitored CCPCH.

13. The method of claim 7, wherein the paging message contains a message type, at least one MBMS service ID related to the MBMS control information, and a paging cause indicating transmission of the MBMS control information.

14. The method of claim 13, wherein the paging message is received on a dedicated control logical channel mapped to the monitored CCPCH.

15. An apparatus for transmitting and receiving MBMS control information in an MBMS, Multimedia Broadcast/Multicast Service, mobile communication system, comprising:
a radio network controller (RNC) for transmitting MBMS control information for an MBMS service on an MBMS control channel, MCCH, mapped to one of a plurality of common control physical channels, CCPCHs, available in a cell of the mobile communication system, and transmitting a paging message on a logical channel mapped to each of the plurality of the CCPCHs, the paging message requesting reception of the MBMS control information; and
at least one use equipment (UE) for monitoring one of the plurality of the CCPCHs, receiving the paging message on the monitored CCPCH, switching to the CCPCH having the MCCH, and receiving the MBMS control information on the switched to CCPCH.

16. The apparatus of claim 15, wherein the RNC transmits the paging message upon generation of a predetermined event requiring transmission of the MBMS control information.

17. The apparatus of claim 16, wherein the event is one of a MBMS notification, a MBMS counting, a channel type notification, and a MBMS termination.

18. The apparatus of claim 15, wherein the paging message contains a message type and at least one MBMS service ID related to the MBMS control information.

19. The apparatus of claim 18, wherein the at least one UE receives the paging message on a common control logical channel mapped to the monitored CCPCH.

20. The apparatus of claim 15, wherein the paging message contains a message type, at least one MBMS service ID related to the MBMS control information, and a paging cause indicating transmission of the MBMS control information.

21. The apparatus of claim 20, wherein the at least one UE receives the paging message on a dedicated control logical channel mapped to the monitored CCPCH.

## Patentansprüche

1. Verfahren zum Senden von MBMS (Multimedia Broadcast/Multicast Service)-Steuerinformationen in einem MBMS-Mobilkommunikationssystem, das die folgenden Schritte umfasst:
Senden von MBMS-Steuerinformationen für einen MBMS-Dienst auf einem MBMS-Steuerkanal (MCCH), der einem einer Vielzahl von CCPCH (Common Control Physical Channel)-Kanälen zugeordnet ist, die in einer Zelle verfügbar sind; und
Senden einer Paging-Nachricht zu wenigstens einem Benutzerendgerät, das den MBMS-Dienst auf einem logischen Kanal empfängt, der jedem der CCPH-Kanäle zugeordnet ist, wobei die Paging-Nachricht das wenigstens eine Benutzerendgerät auffordert, auf den CCPCH-Kanal mit dem MCCH-Kanal zu schalten und die MBMS-Steuerinformationen zu empfangen.

2. Verfahren nach Anspruch 1, wobei die Paging-Nachricht nach Erzeugung eines vorgegebenen Ereignisses gesendet wird, das Senden der MBMS-Steuerinformationen fordert.

3. Verfahren nach Anspruch 2, wobei das Ereignis eine MBMS-Mitteilung, eine MBMS-Zählung, eine Kanaltyp-Mitteilung oder ein MBMS-Abschluss ist.

4. Verfahren nach Anspruch 1, wobei die Paging-Nachricht einen Nachrichtentyp und wenigstens eine MBMS-Dienst-Kennung bezüglich der MBMS-Steuerinformationen enthält.

5. Verfahren nach Anspruch 4, wobei die Paging-Nachricht auf einem logischen CCCH-Kanal gesendet wird, der jedem der CCPCH-Kanäle zugeordnet ist.

6. Verfahren nach Anspruch 1, wobei die Paging-Nachricht einen Nachrichtentyp, wenigstens eine MBMS-Dienst-Kennung bezüglich der MBMS-Steuerinformationen und eine Paging-Cause-Information enthält, die Senden der MBMS-Steuerinformationen anzeigt.

7. Verfahren nach Anspruch 6, wobei die Paging-Nachricht auf einem logischen DCCH (Dedicated Control Channel)-Kanal gesendet wird, der jedem der CCPCH-Kanäle zugeordnet ist.

8. Verfahren zum Empfangen von MBMS-Steuerinformationen in einem MBMS-Mobilkommunikationssystem, das die folgenden Schritte umfasst:
Überwachen eines einer Vielzahl von CCPCH (Common Control Physical Channel)-Kanälen, die in einer Zelle des Mobilkommunikationssystems verfügbar sind, und Empfangen einer Paging-Nachricht, die Empfang von MBMS-Steuerinformationen für einen MBMS-Dienst auf dem überwachten CCPCH-Kanal anfordert; und
Umschalten auf einen CCPCH-Kanal, dem ein MBMS-Steuerkanal zugeordnet ist, aus der Vielzahl von CCPCH-Kanäle und Empfangen der MBMS-Steuerinformationen auf dem CCPCH-Kanal, auf den umgeschaltet wurde.

9. Verfahren nach Anspruch 8, wobei die Paging-Nachricht nach Erzeugung eines vorgegebenen Ereignisses gesendet wird, das Senden der MBMS-Steuerinformationen fordert.

10. Verfahren nach Anspruch 9, wobei das Ereignis eine MBMS-Mitteilung, eine MBMS-Zählung, eine Kanaltyp-Mitteilung oder ein MBMS-Abschluss ist.

11. Verfahren nach Anspruch 7, wobei die Paging-Nachricht einen Nachrichtentyp und wenigstens eine MBMS-Dienst-Kennung bezüglich der MBMS-Steuerinformationen enthält.

12. Verfahren nach Anspruch 11, wobei die Paging-Nachricht auf einem logischen CCCH (Common Control Channel)-Kanal empfangen wird, der dem überwachten CCPCH-Kanal zugeordnet ist.

13. Verfahren nach Anspruch 7, wobei die Paging-Nachricht einen Nachrichtentyp und wenigstens eine MBMS-Dienst-Kennung bezüglich der MBMS-Steuerinformationen sowie eine Paging-Cause-Informationen enthält, die das Senden der MBMS-Steuerinformationen anzeigt.

14. Verfahren nach Anspruch 13, wobei die Paging-Nachricht auf einem logischen CCCH (Dedicated Control Channel)-Kanal empfangen wird, der dem überwachten CCPCH zugeordnet ist.

15. Vorrichtung zum Senden und Empfangen von MBMS-Steuerinformationen in einem MBMS-Mobilkommunikationssystem, die umfasst:
einen Radio Network Controller (RNC) zum Senden von MBMS-Steuerinformationen für einen MBMS-Dienst auf einem MBMS-Steuerkanal (MCCH), der einem einer Vielzahl von CCPCH (Common Control Physical Channel)-Kanälen zugeordnet ist, die in einer Zelle des Mobilkommunikationssystems verfügbar sind, und Senden einer Paging-Nachricht auf einem logischen Kanal, der jedem der Vielzahl der CCPCH-Kanäle zugeordnet ist, wobei die Paging-Nachricht Empfang der MBMS-Steuerinformationen anfordert; und
wenigstens ein Benutzerendgerät zum Überwachen eines der Vielzahl von CCPCH-Kanälen, Empfangen der Paging-Nachricht auf dem überwachten CCPCH-Kanal, Umschalten auf den CCPCH-Kanal mit dem MCCH-Kanal und Empfangen der MBMS-Steuerinformationen auf dem CCPCH-Kanal, auf den umgeschaltet wurde.

16. Vorrichtung nach Anspruch 15, wobei der RNC die Paging-Nachricht nach Erzeugung eines vorgegebenen Ereignisses sendet, das Senden der MBMS-Steuerinformationen fordert.

17. Vorrichtung nach Anspruch 16, wobei das Ereignis eine MBMS-Mitteilung, eine MBMS-Zählung, eine Kanaltyp-Mitteilung oder ein MBMS-Abschluss ist.

18. Vorrichtung nach Anspruch 15, wobei die Paging-Nachricht einen Nachrichtentyp und wenigstens eine MBMS-Service-Kennung bezüglich der MBMS-Steuerinformationen enthält.

19. Vorrichtung nach Anspruch 18, wobei das wenigstens eine Benutzerendgerät die Paging-Nachricht auf einem logischen CCCH (Common Control Channel)-Kanal empfängt, der dem überwachten CCPCH-Kanal zugeordnet ist.

20. Vorrichtung nach Anspruch 15, wobei die Paging-Nachricht einen Nachrichtentyp, wenigstens eine MBMS-Dienst-Kennung bezüglich der MBMS-Steuerinformationen und eine Paging-Cause-Informationen enthält, die Senden der MBMS-Steuerinformationen anzeigt.

21. Vorrichtung nach Anspruch 20, wobei das wenigstens eine Benutzerendgerät die Paging-Nachricht auf einem logischen DCCH (Dedicated Control Channel)-Kanal empfängt, der dem überwachten CCPCH-Kanal zugeordnet ist.

## Revendications

1. Procédé d'émission d'informations de commande MBMS
- pour « *Multimedia Broadcast*/*Multicast Service » -* Service de diffusion générale/de multidiffusion multimédia - dans un système de communication mobile MBMS, comprenant les étapes consistant à :
émettre des informations de commande MBMS pour un service MBMS sur un canal de commande MBMS - MCCH, pour *« MBMS Control Channel » -* Canal de commande MBMS - mappé sur un canal parmi une pluralité de canaux physiques communs de commande - CCPCH, pour « *Common Control Physical Channel* » - disponibles dans une cellule ; et
émettre un message de recherche de personnes vers au moins un équipement utilisateur recevant le service MBMS sur un canal logique mappé sur chacun des canaux CCPCH, le message demandant audit au moins un équipement utilisateur de commuter sur le canal CCPCH transportant le canal MCCH et de recevoir les informations de commande MBMS.

2. Procédé selon la revendication 1, dans lequel le message de recherche de personnes est émis après la production d'un événement prédéterminé qui nécessite l'émission des informations de commande MBMS.

3. Procédé selon la revendication 2, dans lequel l'événement est l'un des suivants : notification MBMS, comptage MBMS, notification de type de canal et terminaison MBMS.

4. Procédé selon la revendication 1, dans lequel le message de recherche de personnes contient un type de message et au moins un identificateur de service MBMS lié aux informations de commande MBMS.

5. Procédé selon la revendication 4, dans lequel le message de recherche de personnes est émis sur un canal logique de commande commun qui est mappé sur chacun des canaux CCPCH.

6. Procédé selon la revendication 1, dans lequel le message de recherche de personnes contient un type de message, au moins un identificateur de service MBMS lié aux informations de commande MBMS et une cause de recherche de personne indiquant l'émission des informations de commande MBMS.

7. Procédé selon la revendication 6, dans lequel le message de recherche de personnes est émis sur un canal logique de commande dédié mappé sur chacun des canaux CCPCH.

8. Procédé de réception d'informations de commande MBMS dans un système de communication mobile MBMS, comprenant les étapes consistant à :
surveiller un canal sur une pluralité de canaux physiques de commande communs - CCPCH - disponibles dans une cellule du système de communication mobile et recevoir un message de recherche de personnes demandant de recevoir des informations de commande MBMS pour un service MBMS sur le canal CCPCH surveillé ; et
commuter sur un canal CCPCH, parmi la pluralité de canaux CCPCH, sur lequel est mappé un canal de commande MBMS - MCCH - et recevoir les informations de commande MBMS sur le canal CCPCH sur lequel la commutation a eu lieu.

9. Procédé selon la revendication 8, dans lequel le message de recherche de personnes est émis après la production d'un événement prédéterminé qui nécessite l'émission des informations de commande MBMS.

10. Procédé selon la revendication 9, dans lequel l'événement est l'un des suivants : notification MBMS, comptage MBMS, notification de type de canal et terminaison MBMS.

11. Procédé selon la revendication 7, dans lequel le message de recherche de personnes contient un type de message et au moins un identificateur de service MBMS lié aux informations de commandé MBMS.

12. Procédé selon la revendication 11, dans lequel le message de recherche de personnes est reçu sur un canal logique de commande commun qui est mappé sur le canal CCPCH surveillé.

13. Procédé selon la revendication 7, dans lequel le message de recherche de personnes contient un type de message, au moins un identificateur de service MBMS lié aux informations de commande MBMS et une cause de recherche de personne indiquant l'émission des informations de commande MBMS.

14. Procédé selon la revendication 13, dans lequel le message de recherche de personnes est reçu sur un canal logique de commande dédié mappé sur le canal CCPCH surveillé.

15. Appareil d'émission et de réception d'informations de commande MBMS dans un système de communication mobile MBMS, comprenant :
un contrôleur de réseau radio - RNC, pour « *Radio Network Controller* » - destiné à émettre des informations de commande MBMS pour un service MBMS sur un canal de commande MBMS - MCCH - mappé sur un canal parmi une pluralité de canaux physiques communs de commande - CCPCH - disponibles dans une cellule du système de communication mobile et à émettre un message de recherche de personnes sur un canal logique mappé sur chacun de la pluralité des canaux CCPCH, le message demandant de recevoir les informations de commande MBMS ; et
au moins un équipement utilisateur, destiné à surveiller un canal sur la pluralité de canaux CCPCH, à recevoir le message de recherche de personnes sur le canal CCPCH surveillé, à commuter sur le canal CCPCH comportant le canal MCCH et à recevoir les informations de commande MBMS sur le canal CCPCH sur lequel la commutation a eu lieu.

16. Appareil selon la revendication 15, dans lequel le contrôleur RNC émet le message de recherche de personnes après la production d'un événement prédéterminé qui nécessite l'émission des informations de commande MBMS.

17. Appareil selon la revendication 16, dans lequel l'événement est l'un des suivants : notification MBMS, comptage MBMS, notification de type de canal et terminaison MBMS.

18. Appareil selon la revendication 15, dans lequel le message de recherche de personnes contient un type de message et au moins un identificateur de service MBMS lié aux informations de commande MBMS.

19. Appareil selon la revendication 18, dans lequel ledit au moins un équipement utilisateur reçoit le message de recherche de personnes sur un canal logique de commande commun qui est mappé sur le canal CCPCH surveillé.

20. Appareil selon la revendication 15, dans lequel le message de recherche de personnes contient un type de message, au moins un identificateur de service MBMS lié aux informations de commande MBMS et une cause de recherche de personne indiquant l'émission des informations de commande MBMS.

21. Appareil selon la revendication 20, dans lequel ledit au moins un équipement utilisateur reçoit le message de recherche de personnes sur un canal logique de commande dédié mappé sur le canal CCPCH surveillé.
